# FASCICULE DE BREVET EUROPEEN

(11) **EP 1 420 524 B1**
(45) Date de publication et mention de la délivrance du brevet: **09.01.2008**
(21) Numéro de dépôt: 03024637.5
(22) Date de dépôt: 27.10.2003
(51) Int. Cl.: H04B 5/00

(54) **Dispositif de communication d'information sans fil, et systéme de communication comprenant le dispositif**
Anordnung zur drahtlosen Informationsübertragung und Kommunikationssystem, das diese Anordnung umfasst
Apparatus for wireless transmission of information and communication system comprising said apparatus

(30) Priorité: 13.11.2002 EP 02080612
(43) Date de publication de la demande: 19.05.2004
(73) Titulaire: ASULAB S.A., 2074 Marin (CH)
(72) Inventeur: Oesch, Yves, 2000 Neuchatel (CH)
(74) Mandataire: Laurent, Jean

(56) Documents cités:
- EP-A- 0 936 808
- US-A1- 2002 071 399
- US-B1- 6 172 608

## Description

L'invention concerne un dispositif de communication d'information sans fil. Le dispositif de communication peut faire partie d'un objet portable, tel qu'une montre. Le dispositif comprend un circuit oscillateur, qui produit des signaux haute fréquence, et une unité de traitement de signaux connectée au circuit oscillateur.

L'invention concerne également un système de communication d'information sans fil à courte distance entre un dispositif de communication et un appareil électronique.

Il faut entendre par communication d'information soit une transmission unidirectionnelle ou une transmission bidirectionnelle d'information ou de données.

Dans le cas d'une communication d'information à courte distance, l'objet portable, qui comprend le dispositif de communication, peut être placé à proximité de ou sur l'appareil électronique. Les signaux généralement transmis lors d'une communication d'information sans fil à courte distance peuvent être des signaux radiofréquences, des signaux acoustiques, des signaux lumineux ou d'autres signaux. Une combinaison de ces différents types de signaux peut aussi être envisagée.

Dans le domaine technique de la communication d'information, il est connu d'opérer un échange d'information entre deux unités proches l'une de l'autre, qui comprennent chacune des moyens d'émission et des moyens de réception de signaux notamment du type radiofréquence. Comme ces moyens d'émission sont généralement différents des moyens de réception, cela exige l'emploi d'un nombre important de composants électroniques. Ceci peut bien évidemment être un inconvénient si ces moyens d'émission et ces moyens de réception doivent équiper un objet portable, tel qu'une montre-bracelet. De plus, un tel objet portable est généralement alimenté par une pile ou un accumulateur, qui occupe également une place importante. Le fonctionnement des moyens d'émission et des moyens de réception de signaux entraîne une consommation électrique importante, ce qui peut être un inconvénient, car la pile ou l'accumulateur risque de se décharger trop rapidement.

Il est à noter que même si les moyens de réception de signaux sont combinés avec les moyens d'émission, le dispositif de communication doit être commuté, soit en mode de réception de signaux de données, soit en mode d'émission de signaux de données, par des éléments électroniques supplémentaires. Ceci constitue un inconvénient supplémentaire à la consommation électrique qui peut être relativement grande.

Le document DE 100 26 173 décrit un arrangement pour le transfert de signaux électriques entre une station de base et au moins une unité externe. L'énergie électrique est transmise par un transformateur, dans lequel une bobine primaire est placée dans la station de base et la bobine secondaire est placée dans l'unité externe. Une communication d'information peut être réalisée de la station de base à l'unité externe à l'aide du transformateur. Un signal de réponse est transmis de l'unité externe à la station de base par des éléments destinés à coupler la station et l'unité externe. Ces éléments de couplage de type inductif par exemple sont différents de ceux du transformateur.

Un inconvénient d'un tel arrangement est qu'il est nécessaire de munir l'unité externe de moyens d'émission de signaux spécifiques pour la transmission d'information. Ces moyens d'émission sont différents des moyens de réception, qui sont constitués notamment par la bobine secondaire du transformateur. Ainsi, même si le transformateur peut être utilisé aussi bien pour la charge de l'accumulateur et la transmission d'information, les composants électroniques supplémentaires des moyens d'émission de l'unité externe peuvent prendre une place considérable et également consommer trop d'énergie électrique.

L'invention a donc pour but de fournir un dispositif de communication d'information sans fil, qui pallie les inconvénients de l'état de l'art susmentionné et qui permet en particulier de s'affranchir de composants supplémentaires à ceux utilisés pour exécuter les fonctions internes du dispositif.

A cet effet, l'invention a pour objet un dispositif de communication d'information sans fil, qui comprend les caractéristiques mentionnées dans la revendication 1.

Un avantage du dispositif de communication, selon l'invention, réside dans le fait qu'il n'est pas nécessaire de munir ledit dispositif de moyens d'émission spécifiques pour la transmission d'information. Ces moyens d'émission sont constitués par la structure de connexion d'une partie d'un circuit oscillateur qui fournit des signaux haute fréquence. La fourniture des signaux haute fréquence produit automatiquement des signaux parasites par la structure de connexion à travers notamment un circuit de pistes conductrices et des éléments électroniques connectés. Cette structure de connexion agit donc comme une antenne d'émission de signaux parasites. Ainsi, ces signaux parasites peuvent être utilisés pour transmettre une information à courte distance. Des moyens de réception d'un appareil électronique peuvent capter les signaux parasites transmis par la structure de connexion du circuit oscillateur du dispositif sur une distance ne dépassant pas normalement quelques centimètres.

Avantageusement, le dispositif de communication comprend des moyens de réception de signaux radiofréquences, et des moyens de conversion de fréquence. Ces moyens de conversion de fréquence comprennent le circuit oscillateur qui peut comprendre à son tour un synthétiseur de fréquence connecté à un bloc oscillateur de référence. Le synthétiseur comprend notamment un oscillateur commandé en tension suivi d'un amplificateur, qui fournit les signaux haute fréquence, un diviseur de fréquence et un détecteur de phase. La fourniture des signaux haute fréquence par le circuit oscillateur est donc nécessaire dans le cas d'un récepteur de signaux radiofréquences.

A l'aide d'au moins un signal de commande fourni au circuit oscillateur par l'unité de traitement, il est possible de transmettre une information en modulant en amplitude ou en fréquence des signaux parasites. La modulation en amplitude des signaux parasites est réalisée par le signal de commande en connectant ou déconnectant au moins un élément de la partie du circuit, qui fournit les signaux haute fréquence. Cette modulation en amplitude des signaux parasites permet de transmettre une séquence de données binaires. La modulation en fréquence des signaux parasites est réalisée par au moins un signal de commande en modifiant préférentiellement le facteur de division d'un ou deux diviseurs de fréquence.

A cet effet, l'invention a également pour objet un système de communication d'information sans fil, qui comprend les caractéristiques mentionnées dans la revendication 7.

Les buts, avantages et caractéristiques du dispositif de communication d'information sans fil, ainsi que le système de communication le comprenant apparaîtront mieux dans la description suivante de modes de réalisation de l'invention en liaison avec les dessins dans lesquels :
Les figures 1a et 1 b représentent schématiquement deux variantes de réalisation du dispositif de communication d'information selon l'invention, qui est constitué d'un récepteur de signaux radiofréquences,
la figure 2 représente schématiquement les composants d'un système de communication comprenant un appareil électronique, tel qu'un dispositif chargeur d'accumulateur et un objet portable, dans lequel le dispositif de communication est disposé, et
les figures 3a et 3b représentent des vues de dessus et de côté du système de communication, qui comprend un dispositif chargeur et une montre à dispositif de communication d'information selon l'invention.

Dans la description suivante, tous les composants électroniques du dispositif ou du système de communication d'information sans fil, qui sont bien connus d'un homme du métier dans ce domaine technique, ne seront pas expliqués en détail.

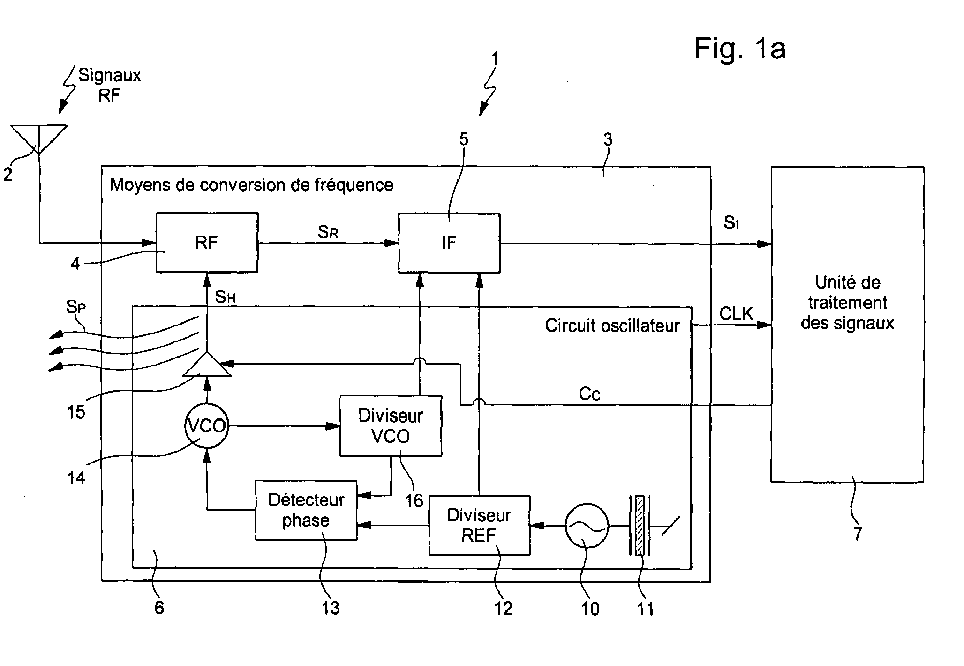

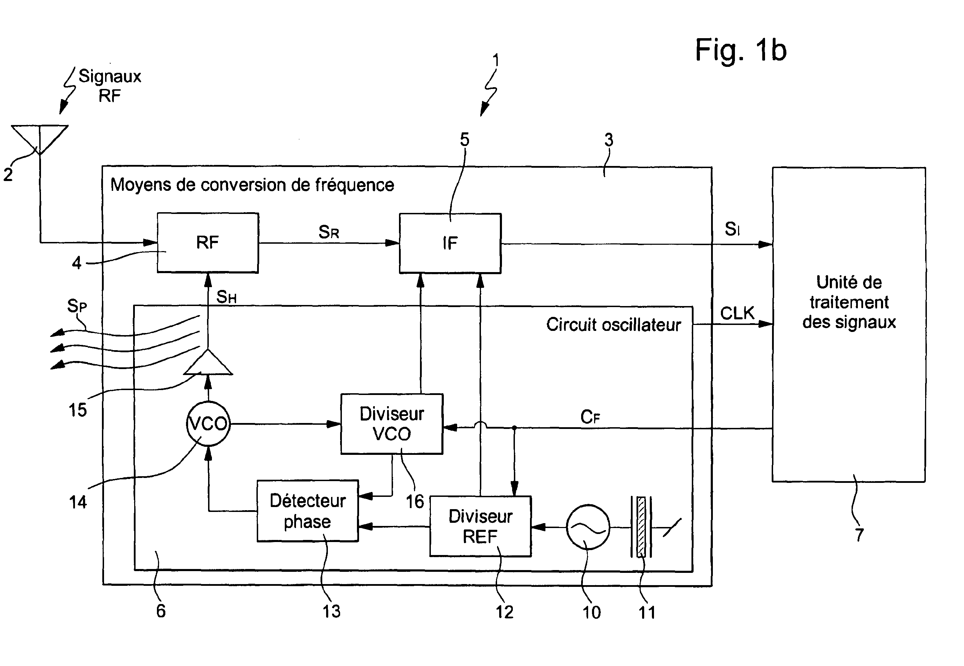

Aux figures 1a et 1b, deux variantes de réalisation du dispositif de communication d'information 1 sont présentées. Ces deux variantes de réalisation diffèrent l'une de l'autre uniquement par la manière de transmettre l'information au moyen de signaux parasites produits par une structure de connexion d'un circuit oscillateur. Dans la première variante de réalisation, l'information est transmise en modulant l'amplitude des signaux parasites, alors que dans la seconde variante de réalisation, l'information est transmise en modulant la fréquence des signaux parasites. Ce dispositif de communication est de préférence constitué par un récepteur de signaux radiofréquences 1 qui est logé dans un objet portable, tel qu'une montre-bracelet.

Ce dispositif de communication 1 comprend des moyens de réception de signaux radiofréquences 2, des moyens de conversion de fréquence 3 des signaux radiofréquences, et une unité de traitement de signaux 7 recevant des signaux intermédiaires S_{I} provenant des moyens de conversion de fréquence. Les moyens de réception sont représentés par une antenne de réception 2 dans les figures 1a et 1b. A noter que les signaux radiofréquences reçus sont encore filtrés et amplifiés dans les moyens de réception.

Les moyens de conversion de fréquence 3 sont utilisés pour abaisser la fréquence des signaux à traiter dans l'unité de traitement 7. Ces moyens de conversion de fréquence comprennent au moins deux circuits mélangeurs 4 et 5 pour opérer une double ou triple conversion de fréquence des signaux radiofréquences. Pour réaliser une double conversion de fréquence, on fournit des premiers signaux haute fréquence S_{H} et des seconds signaux haute fréquence provenant d'un circuit oscillateur 6, respectivement aux circuits mélangeurs 4 et 5. La structure de connexion d'une partie 14, 15 de ce circuit oscillateur, qui fournit des signaux haute fréquence, est utilisée comme une antenne d'émission de signaux parasites porteurs d'information comme expliqué ci-après. Cette structure de connexion comprend aussi bien les éléments électroniques de la partie du circuit oscillateur, que les pistes conductrices de connexion des éléments électroniques entre eux et au circuit mélangeur 4.

Le premier circuit mélangeur 4 reçoit les signaux radiofréquences et les premiers signaux haute fréquence S_{H} afin de fournir des premiers signaux convertis S_{R} au second circuit mélangeur 5. La fréquence (F_{SR}) des premiers signaux convertis est égale, en valeur absolue, au résultat de la soustraction de la fréquence (F_{SH}) des premiers signaux haute fréquence à la fréquence (F_{RF}) des signaux radiofréquences selon la formule F_{SR} = |F_{RF} - F_{SH}|. Le second circuit mélangeur 5 reçoit les premiers signaux convertis S_{R} et les seconds signaux haute fréquence de fréquence inférieure aux premiers signaux haute fréquence. Ce second circuit mélangeur 5 fournit tout d'abord des seconds signaux convertis. La fréquence de ces seconds signaux convertis est égale au résultat de la soustraction de la fréquence des seconds signaux haute fréquence à la fréquence des premiers signaux convertis S_{R}. Dans ce second circuit mélangeur, les seconds signaux convertis sont échantillonnés et quantifiés afin de fournir les signaux intermédiaires S_{I} à l'unité de traitement.

Le circuit oscillateur 6 du dispositif de communication comprend un synthétiseur de fréquence et un bloc oscillateur. Le synthétiseur de fréquence comprend, dans une boucle à verrouillage de phase, un oscillateur commandé en tension 14 suivi d'un amplificateur 15, qui fournit les premiers signaux haute fréquence S_{H}, un premier diviseur 16 de fréquence des signaux fournis par l'oscillateur commandé en tension, et un détecteur de phase 13. Le détecteur de phase 13 compare la fréquence des signaux fournis par le premier diviseur 16 de fréquence et la fréquence des signaux de référence fournis par le bloc oscillateur. Pour fournir ces signaux de référence, le bloc oscillateur est composé d'un oscillateur 10 à cristal de quartz 11 ou SAW (Surface Acoustic Wave en terminologie anglaise), suivi d'un second diviseur de fréquence 12. En fonction de la comparaison effectuée dans le détecteur de phase 13, une tension de sortie du détecteur de phase 13 commande l'oscillateur commandé en tension 14 dénommé VCO (Voltage Controlled Oscillator en terminologie anglaise). L'oscillateur commandé en tension produit donc des signaux haute fréquence dont la fréquence dépend de la tension de sortie du détecteur de phase 13.

L'oscillateur de référence à cristal de quartz peut produire des signaux, dont la fréquence se situe entre 5 et 50 MHz, de préférence entre 17 et 18 MHz. Un facteur de division du diviseur de référence 12 peut être égal à 4 afin de produire des signaux de référence, dont la fréquence est de préférence entre 4,25 et 4,5 MHz. La fréquence des premiers signaux haute fréquence S_{H} peut être comprise entre 100 MHz et 5 GHz. De préférence, la fréquence des premiers signaux haute fréquence peut se situer autour de 1,5 GHz lorsque les signaux radiofréquences sont à une fréquence par exemple d'environ 1,57 GHz. Ainsi, deux opérations de conversion de fréquence par l'intermédiaires de deux mélangeurs peuvent être réalisées dans les moyens de conversion de fréquence 3. Les signaux intermédiaires S_{I} ont une fréquence de l'ordre de 400 kHz de manière à pouvoir être traités dans l'unité de traitement 7.

Comme la fréquence des premiers signaux haute fréquence peut être supérieure au GHz, des signaux parasites S_{P} sont automatiquement émis par la structure de connexion des éléments fonctionnant à cette haute fréquence. Ainsi, en modulant en amplitude ou en fréquence des premiers signaux haute fréquence, il est possible de transmettre de l'information au moyen desdits signaux parasites. La fréquence prédominante des signaux parasites est approximativement égale à la fréquence des premiers signaux haute fréquence.

Dans le cas où le dispositif de communication est un récepteur de signaux radiofréquences de type GPS, l'unité de traitement de signaux 7 comprend un étage de corrélation muni d'au moins un canal de corrélation, un microprocesseur et des moyens de mémorisation, qui ne sont pas représentés. Dans l'étage de corrélation, ces signaux intermédiaires S_{I} sont traités par exemple dans une boucle d'asservissement du code pseudo-aléatoire et dans une boucle d'asservissement de la porteuse bien connues. L'information extraite par le microprocesseur de l'étage de corrélation peut être mémorisée dans les moyens de mémorisation par exemple, ainsi qu'utilisée pour d'éventuelles opérations de calcul.

Le dispositif de communication peut également être en mesure de recevoir des signaux radiofréquences du type CDMA (Code-Division Multiple Access en terminologie anglaise). De ce fait, l'unité de traitement de signaux 7 doit être agencée pour extraire l'information contenue dans les signaux radiofréquences.

L'unité de traitement de signaux 7 est cadencée par des signaux d'horloge CLK fournis par le circuit oscillateur 6 des moyens de conversion de fréquence 3. Ces signaux d'horloge CLK peuvent être composés d'un premier signal d'horloge, dont la fréquence est d'environ 4,5 MHz, et d'un second signal d'horloge, dont la fréquence est d'environ 250 kHz. Le premier signal d'horloge est utilisé essentiellement dans l'étage de corrélation, alors que le second signal d'horloge est utilisé dans l'étage de corrélation et dans le microprocesseur.

Une fois que l'information des signaux radiofréquences a été traitée par l'unité de traitement de signaux 7, une confirmation de la bonne réception de ces signaux radiofréquences peut être transmise au moyen des signaux parasites S_{P}. Pour ce faire, un signal de commande, dépendant de l'information à transmettre, est fourni par l'unité de traitement de signaux 7 au circuit oscillateur 6.

A la figure 1a, le signal de commande C_{C} est appliqué de préférence à l'amplificateur 15 de la partie du circuit oscillateur, qui produit les premiers signaux haute fréquence S_{H}. L'amplificateur, qui fait partie de la structure de connexion, est connecté ou déconnecté par le signal de commande C_{C} en fonction de l'information à transmettre au moyen des signaux parasites S_{P}. Cela a pour conséquence de moduler en amplitude les signaux parasites de manière à transmettre une séquence binaire d'information par cette modulation. Un élément binaire de la séquence binaire vaut 1 quand l'amplitude des signaux parasites est maximale, alors qu'un élément binaire de la séquence binaire vaut 0 quand l'amplitude des signaux parasites est proche de 0. Cette modulation en amplitude par connexion ou déconnexion de l'amplificateur 15 est appelée une modulation OOK (On-Off-Keying en terminologie anglaise).

Le débit d'information transmis au moyen des signaux parasites peut être relativement lent, car le temps de démarrage de l'oscillateur commandé en tension est en général lent. On peut estimer un débit de la séquence binaire de 1 bit/10 ms. De ce fait, la transmission d'information au moyen des signaux parasites par modulation en amplitude peut être relativement longue selon la quantité d'information à transmettre.

Pour transmettre l'information en modulant en amplitude, il peut également être envisagé d'agir sur l'alimentation électrique de plusieurs éléments électroniques du circuit oscillateur 6. Par exemple, il peut être envisagé que le signal de commande permette de connecter ou déconnecter le premier diviseur de fréquence 16, le détecteur de phase 13, l'oscillateur commandé en tension 14 ou une combinaison de ces éléments.

A la figure 1b, au moins un signal de commande C_{F} est appliqué de préférence aux premier et second diviseurs de fréquence 16 et 12 afin d'agir sur les facteurs de division en fonction de l'information à transmettre. La modification des facteurs de division a pour conséquence de modifier la fréquence des premiers signaux haute fréquence. Ainsi, il est possible de réaliser une modulation en fréquence des signaux parasites pour la transmission d'information. Cette modulation en fréquence pour la transmission d'information au moyen des signaux parasites est appelée une modulation FSK (Frequency Shift Keying en terminologie anglaise). Comme dans ce cas l'oscillateur commandé en tension 14 n'est pas déconnecté, le débit d'information à transmettre peut être plus important que dans le cas de la modulation en amplitude.

Bien entendu, la transmission d'information au moyen des signaux parasites ne peut se faire qu'à courte distance. Un appareil de réception des signaux parasites ne doit pas être distant de plus de quelques centimètres d'un objet portable, qui comprend le dispositif de communication, pour capteur les signaux parasites.

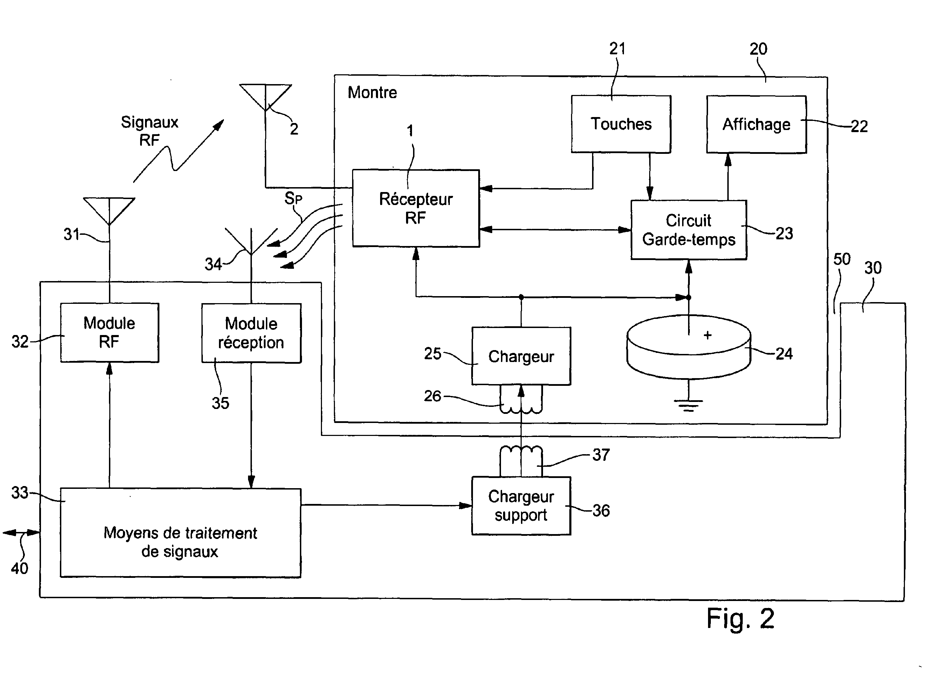

A la figure 2, les composants électroniques d'un système de communication d'information sans fil sont représentés schématiquement. Le système comprend dans cet exemple un appareil électronique 30 et une montre 20 munie du dispositif de communication selon l'invention. L'appareil électronique 30 constitue un support pour la montre 20. L'appareil électronique 30 comprend donc un logement 50 pour recevoir la montre. Ce logement 50 est de préférence adapté à la dimension extérieure de la montre de manière à la placer dans une position déterminée dans le logement de l'appareil 30 pour la communication d'information.

La montre 20 comprend notamment le dispositif de communication d'information 1, qui est dans ce cas un récepteur de signaux radiofréquences avec une antenne 2. La montre comprend également un circuit garde-temps 23, des touches de commande 21, un affichage 22 de l'heure ou d'une information reçue ou transmise, une pile rechargeable ou un accumulateur 24 et un chargeur 25 ayant une bobine secondaire 26. Les touches de commande permettent d'agir aussi bien sur le circuit garde-temps notamment pour le réglage de l'heure et de la date, que sur le récepteur de signaux radiofréquences pour notamment le mettre en fonction. Le chargeur 25 permet de recharger la pile ou l'accumulateur en coopération avec un chargeur de l'appareil électronique 30. Le chargeur 25 est opérationnel quand le niveau de tension détecté de la pile ou de l'accumulateur n'est plus suffisant pour assurer la bonne marche de toutes les fonctions de la montre.

L'appareil électronique, qui est utilisé également comme un dispositif chargeur de pile ou d'accumulateur d'un objet portable, comprend pour l'essentiel un module RF 32 pour la transmission d'une information au moyen de signaux radiofréquences par une antenne 31, un module de réception 35 des signaux parasites S_{P} par une antenne 34, un chargeur principal 36 de l'appareil support ayant une bobine primaire 37, et des moyens de traitement de signaux 33, qui sont connectés à tous les éléments électroniques de l'appareil. Les signaux radiofréquences transmis par l'antenne 31 sont captés par l'antenne 2 du récepteur de signaux radiofréquences de la montre 20.

Les chargeurs 25 et 36, ainsi que leur bobine 26 et 37 constitue un module de charge dans lequel la bobine 37 constitue le primaire du transformateur, tandis que la bobine 26 constitue le secondaire dudit transformateur. Quand le niveau de tension de la pile ou de l'accumulateur de la montre n'est plus suffisant une opération de recharge de la pile ou de l'accumulateur est exécutée. Une information concernant la fin de charge de la pile ou de l'accumulateur peut être transmise au moyen des signaux parasites. La fin de charge de la pile ou de l'accumulateur peut aussi être signalée sur l'appareil par une diode électroluminescente. Une information concernant une bonne réception de l'information des signaux radiofréquences peut également être transmise au moyen des signaux parasites.

Il est à noter que le module de charge de la pile ou de l'accumulateur peut être indépendant de la communication d'information entre le dispositif de communication de la montre et l'appareil électronique. Une opération de charge de la pile ou de l'accumulateur peut être réalisée sans que le dispositif de communication de la montre soit en fonction.

Les moyens de traitement de signaux 33 peuvent mémoriser l'information reçue par le module de réception 35 ou fournir au module RF 32 de l'information à transmettre au moyen des signaux radiofréquences. Une autre information peut également être échangée par un câble de connexion 40 avec une autre unité reliée à l'appareil. L'appareil électronique peut être connectée directement à une station d'ordinateur par exemple.

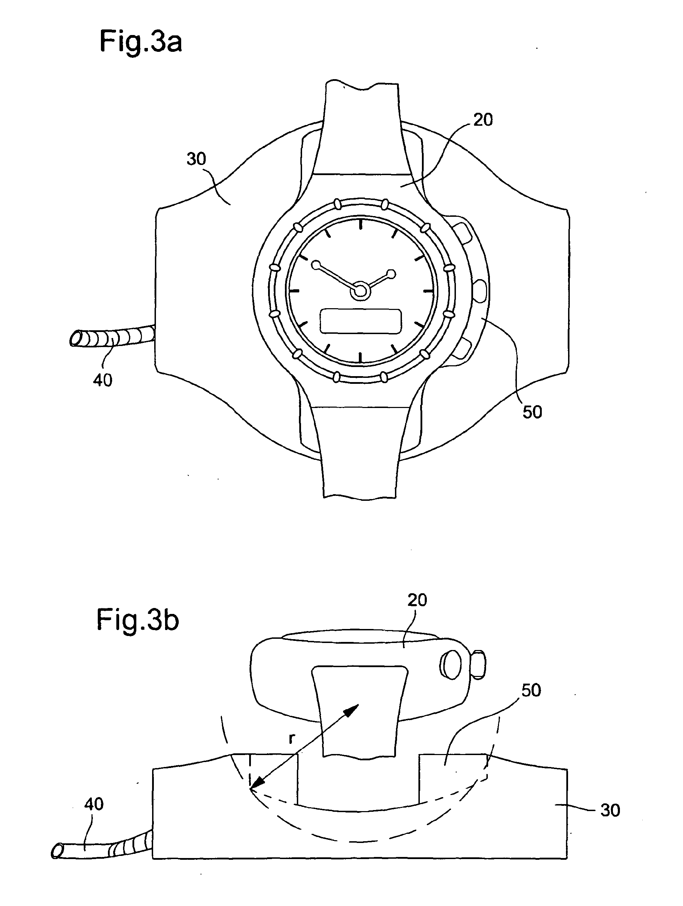

Aux figures 3a et 3b, des vues de dessus et de côté du système de communication d'information, qui comprend l'appareil support électronique 30 et la montre-bracelet 20, sont représentées. La montre-bracelet 20 peut être placée dans une position déterminée dans le logement 50 de l'appareil support en fonction de la position des moyens de réception et d'émission de signaux de chaque unité. Comme montré à la figure 3b pour la réception des signaux parasites, la montre ne peut être éloignée que d'une distance maximale r du module de réception de l'appareil. Cette distance est de l'ordre de quelques centimètres.

L'appareil électronique 30 peut être connecté à une prise d'alimentation électrique par le câble 40 ou être relié notamment à une station d'ordinateur non représentée pour la communication d'information.

A partir de la description qui vient d'être faite de multiples variantes de réalisation du dispositif de communication et du système de communication peuvent être conçues par l'homme du métier sans sortir du cadre de l'invention définie par les revendications. La modulation en fréquence peut être réalisée en modifiant le facteur de division soit du premier diviseur, soit du second diviseur. Les signaux d'information transmis par l'appareil électronique peuvent être des signaux acoustiques, des signaux optiques ou d'autres types de signaux. Les moyens de conversion de fréquence du dispositif de communication peuvent ne comprendre qu'un circuit mélangeur et un circuit oscillateur.

## Revendications

1. Dispositif de communication d'information sans fil (1) notamment d'un objet portable (20), le dispositif comprenant un circuit oscillateur (6), qui produit des signaux haute fréquence (S_{H}), et une unité de traitement de signaux (7) connectée au circuit oscillateur, **caractérisé en ce qu**'une structure de connexion d'une partie du circuit oscillateur (14, 15), qui produit les signaux haute fréquence, est agencée pour servir d'antenne pour la transmission d'information au moyen de signaux parasites (S_{P}) émis par la structure de connexion, et en ce que l'unité de traitement fournit au moins un signal de commande (C_{C}, C_{F}) au circuit oscillateur, ledit signal de commande dépendant de l'information à transmettre au moyen des signaux parasites.

2. Dispositif de communication selon la revendication 1, **caractérisé en ce que** l'unité de traitement fournit un signal de commande (C_{C}) à la partie du circuit oscillateur, qui produit des signaux haute fréquence, de manière à commander l'enclenchement ou le déclenchement d'au moins un élément électronique de ladite partie du circuit oscillateur afin de réaliser une modulation en amplitude des signaux parasites (Sp), ladite modulation dépendant de l'information à transmettre par la structure de connexion.

3. Dispositif de communication selon la revendication 1, **caractérisé en ce que** l'unité de traitement fournit un signal de commande (C_{F}) au circuit oscillateur afin de réaliser une modulation en fréquence des signaux parasites (S_{P}), dont la fréquence est basée sur la fréquence des signaux haute fréquence, ladite modulation dépendant de l'information à transmettre par la structure de connexion.

4. Dispositif de communication selon l'une des revendications précédentes, **caractérisé en ce qu**'il comprend des moyens de réception de signaux radiofréquences (2), et des moyens de conversion de fréquence (3) des signaux radiofréquences, dans lesquels le circuit oscillateur génère des signaux haute fréquence (S_{H}) pour la conversion de fréquence, l'unité de traitement recevant des signaux intermédiaires (Sₗ) convertis en fréquence provenant des moyens de conversion de fréquence afin d'extraire l'information reçue.

5. Dispositif de communication selon l'une des revendications précédentes, **caractérisé en ce que** le circuit oscillateur comprend un synthétiseur de fréquence (13 à 16) connecté à un bloc oscillateur de référence (10, 11, 12), ledit synthétiseur comprenant, dans une boucle à verrouillage de phase, un oscillateur commandé en tension (14) suivi d'un amplificateur (15), qui fournit des signaux haute fréquence, un diviseur de fréquence (16) des signaux fournis par l'oscillateur commandé en tension, et un détecteur de phase (13) comparant la fréquence des signaux fournis par le diviseur de fréquence et la fréquence des signaux de référence fournis par le bloc oscillateur de référence, la sortie du détecteur de phase étant reliée à l'oscillateur commandé en tension, et **en ce que** le signal de commande (C_{C}), fourni par l'unité de traitement, commande l'enclenchement ou le déclenchement de l'amplificateur (15) pour la transmission d'information par modulation en amplitude des signaux parasites (S_{P}).

6. Dispositif de communication selon l'une des revendications 1 à 4, **caractérisé en ce que** le circuit oscillateur comprend un synthétiseur de fréquence (13 à 16) connecté à un bloc oscillateur de référence (10, 11, 12), ledit synthétiseur comprenant, dans une boucle à verrouillage de phase, un oscillateur commandé en tension (14) suivi d'un amplificateur (15), qui fournit des signaux haute fréquence, un diviseur de fréquence (16) des signaux fournis par l'oscillateur commandé en tension, et un détecteur de phase (13) comparant la fréquence des signaux fournis par le diviseur de fréquence et la fréquence des signaux de référence fournis par le bloc oscillateur de référence, la sortie du détecteur de phase étant reliée à l'oscillateur commandé en tension, et **en ce que** l'unité de traitement fournit le signal de commande (C_{F}) au diviseur de fréquence (16) de manière à modifier le facteur de division du diviseur pour la transmission d'information par modulation en fréquence des signaux parasites.

7. Système de communication d'information sans fil à courte distance entre un dispositif de communication selon l'une des revendications précédentes et un appareil électronique (30), **caractérisé en ce que** l'appareil comprend des moyens de réception de signaux parasites (34, 35) et des moyens de traitement de signaux (33) connectés aux moyens de réception afin d'extraire l'information des signaux parasites transmis par le dispositif lorsque le dispositif est placé à proximité de l'appareil.

8. Système de communication selon la revendication 7, dans lequel le dispositif de communication fait partie d'un objet portable, tel qu'une montre, **caractérisé en ce que** l'appareil électronique comprend un logement pour recevoir l'objet portable de manière que l'appareil constitue un support pour l'objet portable.

9. Système de communication selon la revendication 8, **caractérisé en ce que** l'appareil support (30) et l'objet portable (20) comprennent des moyens de charge (25, 26, 36, 37) de type inductif d'une pile ou d'un accumulateur (24) de l'objet portable, les moyens de charge comprenant un transformateur, dont une première bobine (37) constituant le primaire du transformateur est disposée dans l'appareil, et une seconde bobine (26) constituant le secondaire du transformateur est disposée dans l'objet portable.

10. Système de communication selon la revendication 9, **caractérisé en ce que** le dispositif est agencé pour transmettre à l'appareil au moyen des signaux parasites une information relative à la fin d'une opération de charge de la pile ou de l'accumulateur de l'objet portable.

11. Système de communication selon la revendication 7, **caractérisé en ce que** l'appareil électronique comprend des moyens d'émission de signaux radiofréquences (31, 32) pour transmettre une information au dispositif, qui comprend des moyens de réception (2) de signaux radiofréquences, et **en ce que** l'unité de traitement (11) du dispositif fournit un signal de commande (C_{C}, C_{F}) au circuit oscillateur du dispositif pour la transmission au moyen des signaux parasites (S_{P}) d'une confirmation de l'information reçue dans les signaux radiofréquences.

## Claims

1. Wireless data communication device (1) particularly for a portable object (20), the device including an oscillator circuit (6), which produces high frequency signals (S_{H}), and a signal processing unit (7) connected to the oscillator circuit, **characterized in that** a connection structure of one part of the oscillator circuit (14, 15), which produces the high frequency signals, is arranged to act as antenna for the transmission of data by means of stray signals (S_{P}) transmitted by the connection structure, and **in that** the processing unit provides at least one control signal (C_{C}, C_{F}) to the oscillator circuit, said control signal depending upon the data to be transmitted by means of the stray signals.

2. Communication device according to claim 1, **characterized in that** the processing unit provides a control signal (C_{C}) to the part of the oscillator circuit that produces high frequency signals, so as to control the switching on or off of at least one electronic element of said part of the oscillator circuit in order to carry out amplitude modulation of the stray signals (S_{P}), said modulation depending upon the data to be transmitted by the connection structure.

3. Communication device according to claim 1, **characterized in that** the processing unit provides a control signal (C_{F}) to the oscillator circuit in order to carry out a frequency modulation of the stray signals (S_{P}), whose frequency is based on the frequency of the high frequency signals, said modulation depending upon the data to be transmitted by the connection structure.

4. Communication device according to any of the preceding claims, **characterized in that** it includes radiofrequency signal receiving means (2), and radiofrequency signal frequency conversion means (3), wherein the oscillator circuit generates high frequency signals (S_{H}) for the frequency conversion, the processing unit receiving frequency converted intermediate signals (Sₗ) from the frequency conversion means in order to extract the received data.

5. Communication device according to any of the preceding claims, **characterized in that** the oscillator circuit includes a frequency synthesiser (13 to 16) connected to a reference oscillator unit (10, 11, 12), said synthesiser including, in a phase lock loop, a voltage controlled oscillator (14), followed by an amplifier (15), which provides high frequency signals, a frequency divider (16) for signals provided by the voltage controlled oscillator, and a phase detector (13) comparing the frequency of the signals provided by the frequency divider and the frequency of the reference signals provided by the reference oscillator unit, the output of the phase detector being connected to the voltage controlled oscillator, and **in that** the control signal (C_{C}), provided by the processing unit, controls the switching on or off of the amplifier (15) for the transmission of data by amplitude modulation of the stray signals (S_{P}).

6. Communication device according to any of claims 1 to 4, **characterized in that** the oscillator circuit includes a frequency synthesiser (13 to 16) connected to a reference oscillator unit (10, 11, 12), said synthesiser including, in a phase lock loop, a voltage controlled oscillator (14), followed by an amplifier (15), which provides high frequency signals, a frequency divider (16) for the signals provided by the voltage controlled oscillator, and a phase detector (13) comparing the frequency of the signals provided by the frequency divider and the frequency of the reference signals provided by the reference oscillator unit, the output of the phase detector being connected to the voltage controlled oscillator, and **in that** the processing unit provides the control signal (C_{F}) to the frequency divider (16) so as to modify the division factor of the divider for the transmission of data by frequency modulation of the stray signals.

7. Short distance wireless data communication system between a communication device according to any of the preceding claims and an electronic apparatus (30), **characterized in that** the apparatus includes stray signal receiving means (34, 35) and signal processing means (33) connected to the receiving means in order to extract the data from the stray signals transmitted by the device when the device is placed in proximity to the apparatus.

8. Communication system according to claim 7, wherein the communication device forms part of a portable object, such as a watch, **characterized in that** electronic apparatus includes a housing for receiving the portable object so that the apparatus constitutes a support for the portable object.

9. Communication system according to claim 8, **characterized in that** the support apparatus (30) and the portable object (20) include inductive type charging means (25, 26, 36, 37) for a battery or an accumulator (24) of the portable object, the charging means including a transformer, whose first coil (37) forming the primary winding of the transformer, is arranged in the apparatus, and whose second coil (26) forming the secondary winding of the transformer, is arranged in the portable object.

10. Communication system according to claim 9, **characterized in that** the device is arranged for transmitting data to the apparatus, by means of stray signals, relating to the end of the portable object's battery or accumulator charging operation.

11. Communication system according to claim 7, **characterized in that** the electronic apparatus includes radiofrequency transmitting means (31, 32) for transmitting data to the device, which includes radiofrequency signal receiving means (2), and **in that** the processing unit (11) of the device provides a control signal (C_{C}, C_{F}) to the oscillator circuit of the device for the transmission, by means of stray signals (S_{P}), of a confirmation of the data received in the radiofrequency signals.

## Patentansprüche

1. Vorrichtung (1) für eine drahtlose Kommunikation von Informationen insbesondere eines tragbaren Objekts (20), wobei die Vorrichtung eine Oszillatorschaltung (6), die Hochfrequenzsignale (S_{H}) erzeugt, und eine Signalverarbeitungsschaltung (7), die mit der Oszillatorschaltung verbunden ist, umfasst, **dadurch gekennzeichnet, dass** eine Anschlussstruktur eines Teils der Oszillatorschaltung (14, 15), der die Hochfrequenzsignale erzeugt, vorgesehen ist, um als Antenne für die Übertragung von Informationen mittels parasitärer Signale (S_{P}), die von der Anschlussstruktur ausgesendet werden, zu dienen, und dass die Verarbeitungseinheit wenigstens ein Steuersignal (C_{C}, C_{F}) an die Oszillatorschaltung liefert, wobei das Steuersignal von den mittels der parasitären Signale zu übertragenden Informationen abhängt.

2. Kommunikationsvorrichtung nach Anspruch 1, **dadurch gekennzeichnet, dass** die Verarbeitungseinheit ein Steuersignal (C_{C}) zu dem Teil der Oszillatorschaltung liefert, die die Hochfrequenzsignale erzeugt, derart, dass das Einschalten oder Auslösen wenigstens eines elektronischen Elements jenes Teils der Oszillatorschaltung gesteuert wird, um eine Amplitudenmodulation der parasitären Signale (S_{P}) zu verwirklichen, wobei die Modulation von den von der Anschlussstruktur zu übertragenden Informationen abhängt.

3. Kommunikationsvorrichtung nach Anspruch 1, **dadurch gekennzeichnet, dass** die Verarbeitungseinheit ein Steuersignal (C_{F}) an die Oszillatorschaltung liefert, um eine Frequenzmodulation der parasitären Signale (S_{P}) zu verwirklichen, deren Frequenz auf der Frequenz der Hochfrequenzsignale basiert, wobei die Modulation von den von der Anschlussstruktur zu übertragenden Informationen abhängt.

4. Kommunikationsvorrichtung nach einem der vorhergehenden Ansprüche, **dadurch gekennzeichnet, dass** sie Mittel (2) zum Empfangen von Radiofrequenzsignalen und Mittel (3) zum Umsetzen der Frequenz der Radiofrequenzsignale, in denen die Oszillatorschaltung Hochfrequenzsignale (S_{H}) für die Umsetzung der Frequenz erzeugt, umfasst, wobei die Verarbeitungseinheit Zwischensignale (Sⱼ) empfängt, deren Frequenz umgesetzt worden ist und die von Frequenzumsetzungsmitteln stammen, um die empfangenen Informationen zu extrahieren.

5. Kommunikationsvorrichtung nach einem der vorhergehenden Ansprüche, **dadurch gekennzeichnet, dass** die Oszillatorschaltung einen Frequenzsynthetisierer (13 bis 16) umfasst, der an einen Referenzoszillatorblock (10, 11, 12) angeschlossen ist, wobei der Synthetisierer in einer Phasenverriegelungsschleife einen spannungsgesteuerten Oszillator (14), gefolgt von einem Verstärker (15), der Hochfrequenzsignale liefert, einen Teiler (16) der Frequenz der von dem spannungsgesteuerten Oszillator gelieferten Signale sowie einen Phasendetektor (13), der die Frequenz der von dem Frequenzteiler gelieferten Signale und die Frequenz der von dem Referenzoszillatorblock gelieferten Referenzsignale vergleicht, umfasst, wobei der Ausgang des Phasendetektors mit dem spannungsgesteuerten Oszillator verbunden ist, und dass das Steuersignal (C_{C}), das von der Verarbeitungseinheit geliefert wird, das Einschalten oder Auslösen des Verstärkers (15) für die Übertragung von Informationen durch Amplitudenmodulation der parasitären Signale (Sp) steuert.

6. Kommunikationsvorrichtung nach einem der Ansprüche 1 bis 4, **dadurch gekennzeichnet, dass** die Oszillatorschaltung einen Frequenzsynthetisierer (13) umfasst, der an einen Referenzoszillatorblock (10, 11, 12) angeschlossen ist, wobei der Synthetisierer in einer Phasenverriegelungsschleife einen spannungsgesteuerten Oszillator (14), gefolgt von einem Verstärker (15), der Hochfrequenzsignale liefert, einen Teiler (16) der Frequenz der von dem spannungsgesteuerten Oszillator gelieferten Signale und einen Phasendetektor (13), der die Frequenz der von dem Frequenzteiler gelieferten Signale mit der Frequenz der von dem Referenzoszillatorblock gelieferten Referenzsignale vergleicht, umfasst, wobei der Ausgang des Phasendetektors mit dem spannungsgesteuerten Oszillator verbunden ist, und dass die Verarbeitungseinheit das Steuersignal (C_{F}) an den Frequenzteiler (16) in der Weise liefert, dass der Teilungsfaktor des Teilers für die Übertragung von Informationen durch Frequenzmodulation der parasitären Signale modifiziert wird.

7. Drahtloses Kurzstrecken-Kommunikationssystem zwischen einer Kommunikationsvorrichtung nach einem der vorhergehenden Ansprüche und einem elektronischen Gerät (30), **dadurch gekennzeichnet, dass** das Gerät Mittel (34, 35) zum Empfangen parasitärer Signale und Signalverarbeitungsmittel (33), die mit den Empfangsmitteln verbunden sind, um die Informationen der parasitären Signale, die von der Vorrichtung übertragen werden, wenn die Vorrichtung in der Nähe des Geräts angeordnet ist, zu extrahieren, umfasst.

8. Kommunikationssystem nach Anspruch 7, bei dem die Kommunikationsvorrichtung einen Teil des tragbaren Objekts wie etwa einer Uhr bildet, **dadurch gekennzeichnet, dass** das elektronische Gerät einen Aufnahmesitz aufweist, um das tragbare Objekt in der Weise aufzunehmen, dass das Gerät einen Träger für das tragbare Objekt bildet.

9. Kommunikationssystem nach Anspruch 8, **dadurch gekennzeichnet, dass** das Trägergerät (30) und das tragbare Objekt (20) Lademittel (25, 26, 36, 37) des induktiven Typs für einen Batteriestapel oder einen Akkumulator (24) des tragbaren Objekts umfassen, wobei die Lademittel einen Transformator umfassen, wobei eine erste Spule (37), die die Primärwicklung des Transformators bildet, in dem Gerät angeordnet ist und eine zweite Spule (26), die die Sekundärwicklung des Transformators bildet, in dem tragbaren Objekt angeordnet ist.

10. Kommunikationssystem nach Anspruch 9, **dadurch gekennzeichnet, dass** die Vorrichtung so beschaffen ist, dass sie an das Gerät mittels parasitärer Signale eine Information überträgt, die auf das Ende eines Ladevorgangs des Batteriestapels oder des Akkumulators des tragbaren Objekts bezogen ist.

11. Kommunikationssystem nach Anspruch 7, **dadurch gekennzeichnet, dass** das elektronische Gerät Mittel (31, 32) zum Senden von Radiofrequenzsignalen umfasst, um eine Information an die Vorrichtung zu übertragen, die Empfangsmittel (2) für Radiofrequenzsignale enthält, und dass die Verarbeitungseinheit (11) der Vorrichtung ein Steuersignal (C_{C}, C_{F}) an die Oszillatorschaltung der Vorrichtung liefert, um mittels parasitärer Signale (S_{P}) eine Bestätigung der empfangenen Information in den Radiofrequenzsignalen zu übertragen.
